(19) **Europäisches Patentamt**

**European Patent Office**

**Office européen des brevets**

(11) **EP 1 114 664 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(21) Anmeldenummer: **00811148.6**

(22) Anmeldetag: **04.12.2000**

(51) Int Cl.:
***B01D 17/06*** *(2006.01)*

(54) **Verfahren zur Trennung der Bestandteile einer Dispersion**

Process for separating the components of a dispersion

Procédé de séparation les composants d'une dispersion

(84) Benannte Vertragsstaaten:
**DE DK GB**

(30) Priorität: **27.12.1999 DE 19963351**

(43) Veröffentlichungstag der Anmeldung:
**11.07.2001 Patentblatt 2001/28**

(73) Patentinhaber: **Vetco Aibel AS**
**1396 Billingstad (NO)**

(72) Erfinder:
* **Klippel, Norbert, Dr.**
  **5414 Nussbaumen (CH)**
* **Midtgard, Ole-Morten, Dr.**
  **1336 Sandvika (NO)**

(74) Vertreter: **Fröderberg, Anders Oskar**
**Dr Ludwig Brann Patentbyra AB,**
**P.O. Box 171 92**
**104 62 Stockholm (SE)**

(56) Entgegenhaltungen:
GB-A- 1 582 040        US-A- 4 601 834
US-A- 4 988 427

* **P.J.BAILES ET AL.: "Liquid Phase Separation in Pulsed D.C. Fields" TRANSACTION OF THE INSTITUTION OF CHEMICAL ENGINEERS, Bd. 60, 1982, Seiten 115-121, XP000926169 London, Gb**

**Beschreibung**

TECHNISCHES GEBIET

Bei der Erfindung wird ausgegangen von einem Verfahren zur Trennung der Bestandteile einer Dispersion nach dem Oberbegriff des Patentanspruchs 1.

STAND DER TECHNIK

Mit dem Oberbegriff des Patentanspruchs 1 nimmt die Erfindung auf einen Stand der Technik Bezug, wie er aus der Veröffentlichung von P. J. Bailes und S. K. L. Larkai, "AN EXPERIMENTAL INVESTIGATION INTO THE USE OF HIGH VOLTAGE D. C. FIELDS FOR LIQUID PHASE SEPARATION" in: Trans IChemE, Vol. 59, 1981, S. 229 - 235, bekannt ist. Dort wird beschrieben, daß zur Trennung der Bestandteile einer Dispersion, wie z. B. Wasser von Öl, eine pulsierende Gleichspannung mit einer Frequenz im Frequenzbereich von 1 Hz - 60 Hz wirksamer ist als eine konstante, wobei die Form der Impulse nur einen geringen Einfluß hat. U. a. wurden die mittlere Stromstärke und der maximale Spannungsgradient über der Dispersion ständig gemessen. Die Hochspannungselektrode war mit Plexiglas isoliert, wobei dünnere Schichtdicken (3 mm) bei gleicher angelegter Spannung einen größeren Feldgradienten in der Dispersion ergaben als dickere (bis 13 mm).

Aus der EP 0 051 463 B1 ist es bekannt, eine Dispersion einer elektrisch leitenden Flüssigkeit in einer Isolierflüssigkeit, z. B. von Wasser in Öl, auf einem Strömungsweg an Elektroden mit einer pulsierenden Gleichspannung von < 15 kV und mit einer Frequenz im Bereich von 1 Hz - 60 Hz, vorzugsweise im Bereich von 2 Hz - 15 Hz, vorbeizuführen. Die Niederspannungselektrode war vorzugsweise gegenüber der Dispersion elektrisch nicht isoliert, während die Hochspannungselektrode durch Plexiglas elektrisch isoliert war. Die maximale Feldstärke zwischen den Elektroden an dem Strömungsweg lag unter 1100 V/cm, vorzugsweise unter 100 V/cm. Das Volumen der elektrisch leitenden Flüssigkeit hatte am Gesamtvolumen der Dispersion einen Anteil von > 40 %, vorzugsweise von 50 %. Nach dem Leiten durch das elektrostatische Feld setzten sich die Bestandteile der Dispersion in einem Absetztank ab, wonach deren Trennung erfolgte. Es wird eine Abhängigkeit der optimalen Frequenz der anzulegenden pulsierenden Gleichspannung von der Dicke der Isolierschicht der Hochspannungselektrode angegeben.

In der Veröffentlichung von P. J. Bailes und S. K. L. Larkai: "LIQUID PHASE SEPARATION IN PULSED D. C. FIELDS", Trans IChemE, Vol. 60, 1982, S. 115 - 121, ist eine Formel zur Bestimmung der optimalen Frequenz der pulsierenden Gleichspannung in Abhängigkeit von der Dielektrizitätskonstante, Leitfähigkeit und Dicke der Isolierschichten auf den Elektroden angegeben. Es wurde dort mit pulsierenden Gleichspannungen im Bereich von 0,2 kV - 10 kV bei Frequenzen im Bereich von 0,5 Hz - 60 Hz gearbeitet.

DARSTELLUNG DER ERFINDUNG

Die Erfindung, wie sie im Patentanspruch 1 definiert ist, löst die Aufgabe, ein Verfahren zur Trennung der Bestandteile einer Dispersion der eingangs genannten Art derart weiterzuentwickeln, daß eine effektivere Trennung möglich wird.

Vorteilhafte Ausgestaltungen der Erfindung sind in den abhängigen Patentansprüchen definiert.

Ein Vorteil der Erfindung besteht darin, daß eine besonders kostengünstige und betriebssichere Produktion möglich wird. Durch die laufende Messung der elektrischen Leitfähigkeit kann die Pulsationsfrequenz des elektrischen Feldes jederzeit so gesteuert werden, daß eine optimale Trennung der Dispersionsbestandteile erreicht wird. Schwankungen in der Leitfähigkeit der Dispersion werden so rechtzeitig erkannt, bevor eine schlechte Trennung auf Grund einer nicht optimalen Pulsationsfrequenz auftritt. Somit kann eine kontinuierliche, optimale Trennung gewährleistet werden, auch wenn die Beschaffenheit der Eingangsdispersion schwankt. Hierdurch kann z. B. der Produktionsprozeß von Rohöl aus einem Öl-Salzwassergemisch an Schwankungen des Eingangswassergehalts angepaßt werden.

Eine vorteilhafte Anpassung der Frequenz ist nicht allein auf ein pulsierendes Gleichspannungsfeld begrenzt. Sie kann auch für einen Koagulator durchgeführt werden, der mit Wechselspannung betrieben wird. So kann ein konventioneller Koagulator, der für den Betrieb mit 50 Hz oder 60 Hz Netzfrequenz ausgelegt ist, durch den Einbau einer Leitfähigkeitsmeßzelle und eines Frequenzumformers so nachgerüstet werden, daß ein verbessertes Trennergebnis resultiert.

Die Kombination von hintereinandergeschalteten Koagulatoreinheiten ermöglicht es, die elektrische Aufladung der Wassertröpfchen und ihre Bewegung im elektrischen Feld getrennt zu optimieren. Die Aufladung kann durch eine Stufe mit möglichst hoher Ladungsübertragung bei relativ hohen Strömen optimiert werden. Für die Bewegung der so aufgeladenen Tröpfchen ist dann wiederum das äußere elektrische Feld maßgeblich. Dieses kann in einer 2. Stufe durch das Anlegen einer hohen Wechselspannung über isolierte Elektroden sehr groß gehalten werden, ohne daß ein nennenswerter Wirkstrom fließt.

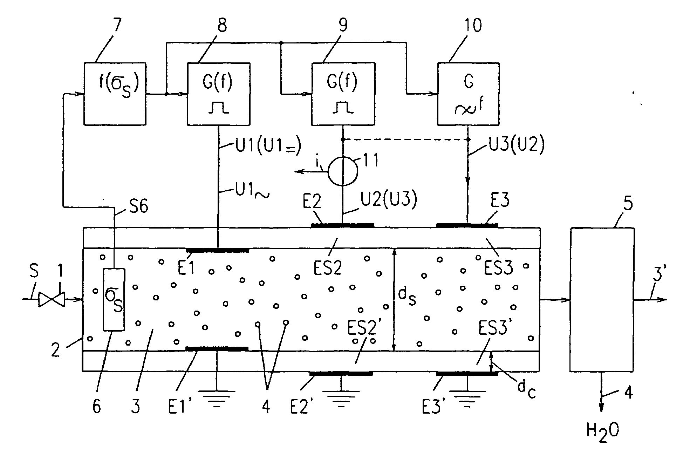

KURZE BESCHREIBUNG DER ZEICHNUNG

Die Erfindung wird nachstehend anhand von Ausführungsbeispielen erläutert. Die einzige Figur zeigt schematisch eine Trennanlage zur Durchführung des Trennverfahrens.

WEGE ZUR AUSFÜHRUNG DER ERFINDUNG

In ein Trenngefäß bzw. Koagulationsgefäß (2) wird über ein Ventil (1) eine Suspension bzw. Dispersion (S) mit einem elektrisch leitenden Dispersum (4), vorzugsweise Wasser bzw. $H_2O$, das in einer Isolierflüssigkeit (3), vorzugsweise Öl, tröpfchenförmig suspendiert bzw. dispergiert ist, zugeführt. Dabei ist der Anteil des Dispersums (4) in der Dispersion (S) vorzugsweise < 40 %. Eingangsseitig ist in dem Koagulationsgefäß (2) ein Detektor für die elektrische Leitfähigkeit $\sigma_s$ der Dispersion (S), d. h., ein Leitfähigkeitsdetektor (6) vorgesehen, der ausgangsseitig ein zur elektrischen Leitfähigkeit $\sigma_s$ der Dispersion (S) proportionales Meßsignal (S6) einem Frequenzgenerator bzw. einer Frequenzsteuereinrichtung (7) zuführt. Diese Frequenzsteuereinrichtung (7) liefert ausgangsseitig ein Frequenzsignal (f) mit einer für die Trennung der Dipersionsbestandteile: Isolierflüssigkeit (3) und Dispersum (4) optimalen Frequenz (f) für eine pulsierende Aufladegleichspannung (U1) an einen Pulsgenerator (8), für eine pulsierende Trennspannung (U2) an einen Pulsgenerator (9) sowie für eine Trennwechselspannung (U3) an einen Sinusgenerator (10), jeweils mit einstellbarer Frequenz. Die Pulsgeneratoren (8, 9) sind Gleichspannungsnetzgeräte, deren Hochspannung primär- oder sekundärseitig periodisch ein- und ausgeschaltet wird.

In dem Koagulationsgefäß (2) ist ein Elektrodenpaar (E1, E1') angeordnet. In Strömungsrichtung der Dispersion (S) folgen hintereinander 2 Elektrodenpaare (E2, E2'; E3, E3'), die außen auf dem elektrisch isolierenden Koagulationsgefäß (2) angeordnet sind. Die Elektroden (E1, E2, E3) sind spannungführend und die Elektroden (E1', E2', E3') geerdet. Während eingangsseitige Aufladungselektroden (E1, E1') wegen der relativ niedrigen pulsierenden Aufladegleichspannung (U1) unbeschichtet bleiben können, sind die nachfolgenden Trennelektroden (E2, E2') sowie (E3, E3') wegen der relativ hohen Trennspannungen (U2, U3) jeweils mit einer Isolationsschicht (ES2, ES2') bzw. (ES3, ES3') mit einer Isolationsschichtdicke $d_c$ im Bereich von 3 mm - 10 mm beschichtet bzw. bedeckt. Im dargestellten Ausführungsbeispiel ist diese Isolationsschichtdicke ($d_c$) gleich der Dicke der elektrodenseitigen Wandung des Koagulationsgefäßes (2). Der Index c bezieht sich dabei auf die jeweilige Isolationsschicht (ES2, ES2'; ES3, ES3'). $d_s$ bezeichnet die Dicke der Dispersion (S) zwischen den Isolationsschichten (ES2, ES2') bzw. zwischen (ES3, ES3'), d. h., den Abstand der jeweiligen Isolationsschichten eines Elektrodenpaares, welcher im Bereich von 1 cm - 10 cm liegt.

Die Aufladungselektrode (E1) erhält von dem Pulsgenerator (8) die pulsierende Aufladegleichspannung (U1) mit einer Spannungsamplitude im Bereich von 500 V - 5 kV. Alternativ dazu kann eine Aufladegleichspannung (U1=) oder eine Aufladewechselspannung (U1-) gleicher Amplitude wie (U1) zur elektrischen Aufladung der Wassertröpfchen (4) in der Isolierflüssigkeit (3) verwendet werden.

Die Trennelektrode (E2) erhält von dem Pulsgenerator (9) die pulsierende Trennspannung (U2) mit einer Spannungsamplitude im Bereich von 5 kV - 30 kV. Alternativ dazu kann die Trennwechselspannung (U3), wie gestrichelt angedeutet, an die Trennelektrode (E2) angelegt werden. Es könnte auch die pulsierende Trennspannung (U2) anstelle der Trennwechselspannung (U3) an der in Strömungsrichtung der Dispersion (S) hintersten Trennelektrode (E3) angelegt sein, wobei an die in Strömungsrichtung davor angebrachte Trennelektrode (E2) die Trennwechselspannung (U3) angelegt ist (nicht dargestellt).

Die zur Trennelektrode (E2) übertragene elektrische Ladung wird über eine integrale Messung des elektrischen Stromes (i) erfaßt und von einem Datenwandler (11) als optisches Signal in eine rechnergesteuerte Auswertungseinrichtung (nicht dargestellt) übertragen.

Die Frequenz (f) am Ausgang der Frequenzsteuereinrichtung (7) sollte um nicht mehr als - 50 % und + 100 %, vorzugsweise um nicht mehr als $\pm$ 20 % abweichen von einem berechneten optimalen Frequenzwert $f_x = 1/(2 \cdot \pi \cdot \tau)$ mit

$$\tau = \varepsilon_0 \cdot (d_s \cdot \varepsilon_c + d_c \cdot \varepsilon_s)/(d_s \cdot \sigma_c + d_c \cdot \sigma_s)$$

$$= \text{Relaxationszeit von c.}$$

$\sigma_t$ = elektrische Leitfähigkeit von c,

$\varepsilon_c$ = Dielektrizitätskonstante von c,

$\varepsilon_s$ = Dielektrizitätskonstante von S,

$\varepsilon_0$ = Dielekrizitätskonstante des Vakuums.

Vorzugsweise liegt diese Frequenz (f) im Frequenzbereich von > 60 Hz - 1 kHz.

Die strömungsseitig hinterste Trennelektrode (E3) erhält ihre Trennwechselspannung (U3) von dem Sinusgenerator (10) oder von einem Hochspannungstransformator (nicht dargestellt), der direkt an die Netzfrequenz angeschlossen ist.

Während das pulsierende elektrische Feld zwischen dem 2. Elektrodenpaar (E2, E2') vorwiegend für eine hohe Aufladung der Wassertröpfchen (4) in der Dispersion (S) sorgt, bewirkt das elektrische Feld zwischen dem 3. Elektrodenpaar (E3, E3') vorwiegend deren Wanderung in dem bipolaren Feld. Mit diesem 2stufigen Trennverfahren, d. h. bei fehlendem 1. Elektrodenpaar (E1, E1'), erhält man einen höheren Wirkungsgrad bei der Trennung der Dispersionsbestandteile (3, 4) der Dispersion (S) als bei einem 1stufigen Trennverfahren nur mit dem 2. Elektrodenpaar (E2, E2').

Mit Hilfe des 1. Elektrodenpaares (E1, E1'), das strömungsseitig vor dem 2. Elektrodenpaar (E2, E2') angeordnet ist und mit einer niedrigen elektrischen Aufladegleichspannung (U1) in einem Bereich von 500 V - 5 kV bei einem relativ hohem Strom betrieben wird, erreicht man eine zusätzliche Verbesserung bei der elektrischen Aufladung der Wassertröpfchen (4) und damit eine bedeutende Erhöhung des Wirkungsgrades des Trennverfahrens.

Dabei wird die elektrische Feldstärke zwischen dem 2. Elektrodenpaar (E2, E2') höher und der Stroms (i) zum 2. Elektrodenpaar (E2, E2') kleiner gehalten als am 1. Elektrodenpaar (E1, E1'), um eine starke Bewegung der elektrisch aufgeladenen Wassertröpfchen (4) zur Elektrode (E2) hin zu bewirken. Das 3. Elektrodenpaar (E3, E3') kann zusätzlich vorgesehen sein und eine weitere Verbesserung des Wirkungsgrades des Trennverfahrens bewirken.

Ausgangsseitig ist das Koagulationsgefäß (2) an ein Absetzgefäß (5) angeschlossen, aus dem eine abgeschiedene Isolierflüssigkeit (3') und das Dispersum (4) getrennt abgeführt werden können.

Es versteht sich, daß die Elektroden (E1, E2, E3) nicht geerdet sein müssen. Die Erdung könnte auch umgekehrt (bezüglich der Darstellung) ausgeführt sein. Die Polarität der pulsierenden Trennspannung (U2) kann frei gewählt werden.

BEZEICHNUNGSLISTE

| | |
|---|---|
| 1 | Ventil |
| 2 | Trenngefäß, Koagulationsgefäß |
| 3 | Isolierflüssigkeit, Öl |
| 3' | abgeschiedene Isolierflüssigkeit, Öl |
| 4 | elektrisch leitendes Dispersum, Wasser, $H_2O$ |
| 5 | Absetzgefäß |
| 6 | Detektor für die elektrische Leitfähigkeit von S, Leitfähigkeitsdetektor |
| 7 | Frequenzgenerator, Frequenzsteuereinrichtung |
| 8, 9 | Pulsgeneratoren mit veränderlicher Frequenz |
| 10 | Sinusgenerator mit veränderlicher Frequenz |
| 11 | Stromdetektor, Datenwandler |
| c | Isolationsschicht (ES2, ES2', ES3, ES3') von E2, E2'; E3, E3' |
| $d_c$ | Dicke von c |
| $d_s$ | Dicke von S zwischen ES2, ES2' bzw. ES3, ES3', Abstand zwischen ES2, ES2' bzw. ES3, ES3' |
| E1, E2, E3 | spannungführende Elektroden |
| E1', E2', E3' | geerdete Gegenelektroden zu E1 bzw. E2 bzw. E3 |
| ES2, ES3 | Isolationsschichten von E2 bzw. E3 |
| ES2', ES3' | Isolationsschichten von E2' bzw. E3' |
| f | Frequenz |
| $f_x$ | optimaler Frequenzwert |
| G | Generator |
| i | Strom, Stromsignal |
| S | Dispersion, Suspension |
| S6 | Meßsignal am Ausgang von 6 |
| U1 | Ladespannung, pulsierende Gleichspannung an E1 |
| $U1_=$ | Ladegleichspannung an E1 |
| $U1_\sim$ | Ladewechselspannung an E1 |
| U2 | Trennspannung, pulsierende Gleichspannung an E2 |
| U3 | Trennspannung, Wechselspannung an E3 oder E2 |
| $\varepsilon_c$ | Isolationsschicht-Dielektrizitätskonstante von c |
| $\varepsilon_s$ | Dispersions-Dielektrizitätskonstante von S |
| $\varepsilon_0$ | Dielektrizitätskonstante des Vakuums |

$\sigma_c$ — elektrische Leitfähigkeit von c
$\sigma_s$ — elektrische Leitfähigkeit von S
$\tau$ — Relaxationszeit von c

**Patentansprüche**

1. Verfahren zur Trennung der Bestandteile (3, 4) einer Dispersion (S) mit einem elektrisch leitenden Dispersum (4), das in einer Isolierflüssigkeit (3) dispergiert ist,

   a) wobei diese Dispersion (S) durch mindestens ein pulsierendes elektrisches Feld geleitet und
   b) danach das Dispersum (4) von der Isolierflüssigkeit (3) abgetrennt wird, und
   c) daß die elektrische Leitfähigkeit $\sigma_s$ dieser Dispersion (S) kontinuierlich oder diskontinuierlich gemessen wird **dadurch gekennzeichnet**
   d) daß in Abhängigkeit von der gemessenen Leitfähigkeit $\sigma_S$ der Dispersion (S) die Frequenz (f) der Pulsationen des elektrischen Feldes gesteuert wird.

2. Verfahren nach Anspruch 1, **dadurch gekennzeichnet**,

   a) daß die Frequenz (f) der Pulsationen des elektrischen Feldes um nicht mehr als - 50 % und + 100 % abweicht von einem berechneten Frequenzwert $f_x = 1/(2 \cdot \pi \cdot \tau)$ mit

$$\tau = \varepsilon_0 \cdot (d_S \cdot \varepsilon_c + d_c \cdot \varepsilon_S)/(d_S \cdot \sigma_c + d_c \cdot \sigma_S),$$

   c = Isolationsschicht (ES2, ES2', ES3, ES3') von Elektroden (E2, E2'; E3, E3') zum Anlegen des pulsierenden elektrischen Feldes,
   $d_c$ = Dicke einer Isolationsschicht von c,
   $d_S$ = Dicke von S zwischen diesen Isolationsschichten (ES2, ES2'; ES3, ES3'),
   $\sigma_c$, $\sigma_S$ = elektrische Leitfähigkeit von c bzw. S,
   $\varepsilon_c$, $\varepsilon_S$ = Dielektrizitätskonstante von c bzw. S,
   $\varepsilon_0$ = Dielekrizitätskonstante des Vakuums,

   b) insbesondere, daß diese Frequenz (f) der Pulsationen um nicht mehr als $\pm$ 20 % von diesem berechneten Frequenzwert $f_x$ abweicht.

3. Verfahren nach Anspruch. 1 oder 2, **dadurch gekennzeichnet, daß** das pulsierende elektrische Feld ein Feld einer bipolaren elektrischen Wechselspannung (U3) ist.

4. Verfahren nach Anspruch 1 oder 2, **dadurch gekennzeichnet**,

   a) daß die Dispersion (S) durch zwei in ihrer Strömungsrichtung aufeinanderfolgende pulsierende elektrische Felder geleitet wird,
   b) daß eines der beiden elektrischen Felder ein elektrisches Feld einer pulsierenden Gleichspannung (U2) und
   c) daß das andere ein elektrisches Feld einer Wechselspannung (U3) ist.

5. Verfahren nach einem der vorhergehenden Ansprüche, **dadurch gekennzeichnet, daß** elektrisch leitende Tröpfchen (4) in der Isolierflüssigkeit (3) in einem elektrischen Feld einer Aufladespannung (U1, U1=, U1_) bis zu 5 kV elektrisch aufgeladen werden, bevor sie dem mindestens einen pulsierenden elektrischen Feld einer pulsierenden Trennspannung (U2, U3) zur Trennung der Bestandteile (3, 4) der Dispersion (S) ausgesetzt werden.

6. Verfahren nach einem der vorhergehenden Ansprüche, **dadurch gekennzeichnet, daß** der Anteil des Dispersums (4) in der Dispersion (S) < 40 % ist.

7. Verfahren nach einem der vorhergehenden Ansprüche, **dadurch gekennzeichnet**,

   a) daß die Isolierflüssigkeit (3) Öl ist,

b) insbesondere, daß das Dispersum (4) Wasser ist.

8. Verfahren nach einem der vorhergehenden Ansprüche, **dadurch gekennzeichnet, daß** die Frequenz (f) der Pulsationen des mindestens einen pulsierenden elektrischen Feldes im Frequenzbereich von > 60 Hz - 1 kHz liegt.

**Claims**

1. A method for separating the constituents (3, 4) of a dispersion (S) having an electrically conducting dispersum (4) which is dispersed in an insulating liquid (3), wherein

   a) the dispersion (S) being led through at least one pulsating electric field, and
   b) the dispersum (4) subsequently being separated from the insulating liquid (3), and
   c) the electric conductivity $\sigma_s$ of the dispersion (S) is measured continuously or discontinuously, **characterized in that**
   d) the frequency (f) of the pulsations of the electric field is controlled as a function of the measured conductivity $\sigma_s$ of the dispersion (S).

2. The method according to claim 1, **characterized in that**

   a) the frequency (f) of the pulsations of the electric field deviates by no more than - 50 % and + 100 % from a calculated frequency value $f_x = 1/(2 \cdot \pi \cdot \tau)$, where

$$\tau = \varepsilon_0 \cdot (d_s \cdot \varepsilon_c + d_c \cdot \varepsilon_s) / (d_s \cdot \sigma_c + d_c \cdot \sigma_s),$$

   c = insulating layer (ES2, ES2', ES3, ES3') of electrodes (E2, E2', E3, E3') for applying the pulsating electric field,
   $d_c$ = thickness of insulating layer of c,
   $d_s$ = thickness of S between insulating layers (ES2, ES2'; ES3, ES3'),
   $\sigma_c$, $\sigma_s$ = electric conductivity of c and S respectively,
   $\varepsilon_c$, $\varepsilon_s$ = dielectric constant of c and S respectively,
   $\varepsilon_0$ = dielectric constant of vacuum,

   b) in particular that the frequency (f) of the pulsations deviates by no more than $\pm$ 20% from the calculated frequency value $f_x$.

3. The method according to claim 1 or 2, **characterized in that** the pulsating electric field is a field of a bipolar electric AC voltage (U3).

4. The method according to claim 1 or 2, **characterized in that**

   a) the dispersion (S) is led through two pulsating electric fields, which follow one another in their flow direction,
   b) one of the two electric fields is an electric field of a pulsating DC voltage (U2), and
   c) the other is an electric field of an AC voltage (U3).

5. The method according to any preceding claims, **characterized in that** electrically conducting droplets (4) in the insulating liquid (3) are electrically charged in an electric field of a charging voltage (U1, U1=, U1-) of up to 5 kV, before they are exposed to the at least one pulsating electric field of a pulsating separating voltage (U2, U3) for the purpose of separating the constituents (3, 4) of the dispersion (S).

6. The method according to any preceding claims, **characterized in that** the proportion of the dispersum (4) in the dispersion (S) is ≤ 40%.

7. The method according to any preceding claims, **characterized in that**

   a) the insulating liquid (3) is oil,

b) in particular, the dispersum (4) is water.

**8.** The method according to any preceding claims, **characterized in that** the frequency (f) of the pulsations of the at least one pulsating electric field is in the frequency range of > 60 Hz - 1 kHz.

**Revendications**

**1.** Procédé de séparation des constituants (3, 4) d'une dispersion (S) ayant un dispersum (4) conducteur de l'électricité qui est dispersé dans un liquide (3) isolant,

a) dans lequel on fait passer cette dispersion dans au moins un champ électrique pulsé ; et
b) on sépare ensuite le dispersum (4) du liquide (3) isolant ; et
c) on mesure en continu ou en discontinu la conductivité $\sigma_s$ électrique de cette dispersion (S),
**caractérisé**
d) en ce que l'on règle la fréquence (f) des pulsations du champ électrique en fonction de la conductivité $\sigma_s$ mesurée de la dispersion (S).

**2.** Procédé suivant la revendication 1, **caractérisé**

a) en ce que la fréquence (f) des pulsations du champ électrique ne s'écarte de pas plus de -50 % et de + 100 % d'une valeur de fréquence calculée $f_x = 1/(2 \cdot \pi \cdot \tau)$ avec

$$\tau = \varepsilon_0 \cdot (d_s \cdot \varepsilon_c + d_c \cdot \varepsilon_s) / (d_s \cdot \sigma_c + d_c \cdot \sigma_s),$$

c = couche (ES2, ES2', ES3, ES3') isolante d'électrodes (E2, E2', E3, E3') pour appliquer le champ électrique pulsé,
$d_c$ = épaisseur d'une couche isolante de c,
$d_s$ = épaisseur de S entre ces couches (ES2, ES2', ES3, ES3') isolantes,
$\sigma_c, \sigma_s$ = conductivité électrique de c et de S,
$\varepsilon_c, \varepsilon_s$ = constante diélectrique de c et de S,
$\varepsilon_0$ = constante diélectrique du vide,

b) notamment en ce que cette fréquence (f) des pulsations ne s'écarte pas de plus de $\pm$ 20 % de cette valeur de fréquence $f_x$ calculée.

**3.** Procédé suivant la revendication 1 ou 2, **caractérisé en ce que** le champ électrique pulsé est un champ d'une tension (U3) alternative électrique bipolaire.

**4.** Procédé suivant la revendication 1 ou 2, **caractérisé**

a) en ce que l'on envoie la dispersion (S) dans deux champs électriques pulsés se succédant dans la direction du courant,
b) en ce que l'un des deux champs électriques est un champ électrique d'une tension (U2) continue pulsée, et
c) en ce que l'autre est un champ électrique d'une tension (U3) alternative.

**5.** Procédé suivant l'une des revendications précédentes, **caractérisé en ce qu'**on charge électriquement des gouttelettes (4) conductrices de l'électricité du liquide (3) isolant dans un champ électrique d'une tension (U1, U1=, U1_) de charge allant jusqu'à 5 kV, avant de les soumettre à l'au moins un champ électrique pulsé d'une tension (U2, U3) de séparation pulsée pour la séparation des constituants (3, 4) de la dispersion (S).

**6.** Procédé suivant l'une des revendications précédentes, **caractérisé en ce que** la proportion du dispersum (4) dans la dispersion (S) est inférieure ou égale à 40 %.

**7.** Procédé suivant l'une des revendications précédentes, **caractérisé**

a) en ce que le liquide (3) isolant est de l'huile ;
b) notamment en ce que le dispersum (4) est de l'eau.

8. Procédé suivant l'une des revendications précédentes, **caractérisé en ce que** la fréquence (f) des pulsations du au moins un champ électrique pulsé est dans la plage de fréquences supérieur à 60 Hz à 1 kHz.